# EUROPEAN PATENT APPLICATION

(11) **EP 4 757 446 A1**
(43) Date of publication of application: **10.06.2026**
(21) Application number: 24849389.2
(22) Date of filing: 01.07.2024
(51) Int. Cl.: H04W 60/04, H04W 4/021, H04W 48/18, H04W 48/20, H04W 8/02

(54) **COMMUNICATION BASED ON AREA OF SERVICE OF NETWORK SLICE**

(30) Priority: 28.07.2023 US 202363529380 P
(71) Applicant: LG Electronics Inc., Yeongdeungpo-gu Seoul 07336 (KR)
(72) Inventor: KIM, Minseon, Seoul 06772 (KR); KIM, Sunhee, Seoul 06772 (KR); CHOE, Hyunjung, Seoul 06772 (KR)
(74) Representative: Plasseraud IP
(86) International application number: PCT/KR2024/009195
(87) International publication number: WO 2025/028818

(57) **Abstract**

A disclosure of the present specification provides a method by which a UE performs communication. The method may comprise the steps of: transmitting a registration request message to an AMF; receiving a registration acceptance message from the AMF; determining whether or not the UE is located within an area of service of a network slice; and transmitting a NAS message to the AMF.

## Description

### TECHNICAL FIELD

The present disclosure relates to mobile communication.

### BACKGROUND ART

3rd generation partnership project (3GPP) long-term evolution (LTE) is a technology for enabling high-speed packet communications. Many schemes have been proposed for the LTE objective including those that aim to reduce user and provider costs, improve service quality, and expand and improve coverage and system capacity. The 3GPP LTE requires reduced cost per bit, increased service availability, flexible use of a frequency band, a simple structure, an open interface, and adequate power consumption of a terminal as an upper-level requirement.

Work has started in international telecommunication union (ITU) and 3GPP to develop requirements and specifications for new radio (NR) systems. 3GPP has to identify and develop the technology components needed for successfully standardizing the new RAT timely satisfying both the urgent market needs, and the more long-term requirements set forth by the ITU radio communication sector (ITU-R) international mobile telecommunications (IMT)-2020 process. Further, the NR should be able to use any spectrum band ranging at least up to 100 GHz that may be made available for wireless communications even in a more distant future.

The NR targets a single technical framework addressing all usage scenarios, requirements and deployment scenarios including enhanced mobile broadband (eMBB), massive machine-type-communications (mMTC), ultra-reliable and low latency communications (URLLC), etc. The NR shall be inherently forward compatible.

User Equipment (UE) may perform a cell selection (or reselection) procedure. However, according to the prior art, there is a problem in that it cannot guarantee that a cell supporting the network slice required by the UE will be selected.

### DISCLOSURE

### TECHNICAL SOLUTION

Communication can be performed based on the UE's location and the service area of the network slice.

According to an embodiment of the present specification, a method for a UE to perform communication is provided. The method may include: transmitting a registration request message to an AMF; receiving a registration accept message from the AMF; determining whether the UE is located within the area of service of the network slice; and transmitting a NAS message to the AMF.

According to an embodiment, a device implementing the method is provided.

According to an embodiment of the present specification, a method for an AMF to perform communication is provided. The method may include: receiving a registration request message from a UE; and transmitting a registration accept message to the UE.

According to an embodiment, a device implementing the method is provided.

### BRIEF DESCRIPTION OF THE DRAWINGS

FIG. 1 shows an example of a communication system to which implementations of the present disclosure are applied.
FIG. 2 shows an example of wireless devices to which implementations of the present disclosure are applied.
FIG. 3 shows an example of UE to which implementations of the present disclosure are applied.
FIG. 4 shows an example of 5G system architecture to which implementations of the present disclosure are applied.
FIGS. 5 and 6 show an example of a registration procedure to which implementations of the present disclosure are applied.
FIG. 7 is an exemplary diagram illustrating an example of an architecture for implementing the concept of network slicing.
FIG. 8 is an exemplary diagram illustrating another example of an architecture for implementing the concept of network slicing.
FIG. 9 illustrates an example of reverting to the existing NG-RAN due to slice not being supported.
FIG. 10 illustrates an example of service interruption due to slice not being supported.
FIG. 11 illustrates an example of a procedure according to an embodiment of the present disclosure.
FIG. 12 illustrates an example of operations according to an embodiment of the present disclosure.

### MODE FOR INVENTION

The following techniques, apparatuses, and systems may be applied to a variety of wireless multiple access systems. Examples of the multiple access systems include a code division multiple access (CDMA) system, a frequency division multiple access (FDMA) system, a time division multiple access (TDMA) system, an orthogonal frequency division multiple access (OFDMA) system, a single carrier frequency division multiple access (SC-FDMA) system, and a multicarrier frequency division multiple access (MC-FDMA) system. CDMA may be embodied through radio technology such as universal terrestrial radio access (UTRA) or CDMA2000. TDMA may be embodied through radio technology such as global system for mobile communications (GSM), general packet radio service (GPRS), or enhanced data rates for GSM evolution (EDGE). OFDMA may be embodied through radio technology such as institute of electrical and electronics engineers (IEEE) 802.11 (Wi-Fi), IEEE 802.16 (WiMAX), IEEE 802.20, or evolved UTRA (E-UTRA). UTRA is a part of a universal mobile telecommunications system (UMTS). 3rd generation partnership project (3GPP) long term evolution (LTE) is a part of evolved UMTS (E-UMTS) using E-UTRA. 3GPP LTE employs OFDMA in DL and SC-FDMA in UL. Evolution of 3GPP LTE includes LTE-A (advanced), LTE-A Pro, and/or 5G new radio (NR).

For convenience of description, implementations of the present disclosure are mainly described in regards to a 3GPP based wireless communication system. However, the technical features of the present disclosure are not limited thereto. For example, although the following detailed description is given based on a mobile communication system corresponding to a 3GPP based wireless communication system, aspects of the present disclosure that are not limited to 3GPP based wireless communication system are applicable to other mobile communication systems.

For terms and technologies which are not specifically described among the terms of and technologies employed in the present disclosure, the wireless communication standard documents published before the present disclosure may be referenced.

In the present disclosure, "A or B" may mean "only A", "only B", or "both A and B". In other words, "A or B" in the present disclosure may be interpreted as "A and/or B". For example, "A, B or C" in the present disclosure may mean "only A", "only B", "only C", or "any combination of A, B and C".

In the present disclosure, slash (/) or comma (,) may mean "and/or". For example, "A/B" may mean "A and/or B". Accordingly, "A/B" may mean "only A", "only B", or "both A and B". For example, "A, B, C" may mean "A, B or C".

In the present disclosure, "at least one of A and B" may mean "only A", "only B" or "both A and B". In addition, the expression "at least one of A or B" or "at least one of A and/or B" in the present disclosure may be interpreted as same as "at least one of A and B".

In addition, in the present disclosure, "at least one of A, B and C" may mean "only A", "only B", "only C", or "any combination of A, B and C". In addition, "at least one of A, B or C" or "at least one of A, B and/or C" may mean "at least one of A, B and C".

Also, parentheses used in the present disclosure may mean "for example". In detail, when it is shown as "control information (PDCCH)", "PDCCH" may be proposed as an example of "control information". In other words, "control information" in the present disclosure is not limited to "PDCCH", and "PDCCH" may be proposed as an example of "control information". In addition, even when shown as "control information (i.e., PDCCH)", "PDCCH" may be proposed as an example of "control information".

Technical features that are separately described in one drawing in the present disclosure may be implemented separately or simultaneously.

Although not limited thereto, various descriptions, functions, procedures, suggestions, methods and/or operational flowcharts of the present disclosure can be applied to various fields requiring wireless communication and/or connection (e.g., 5G) between devices.

Hereinafter, the present disclosure will be described in more detail with reference to drawings. The same reference numerals in the following drawings and/or descriptions may refer to the same and/or corresponding hardware blocks, software blocks, and/or functional blocks unless otherwise indicated.

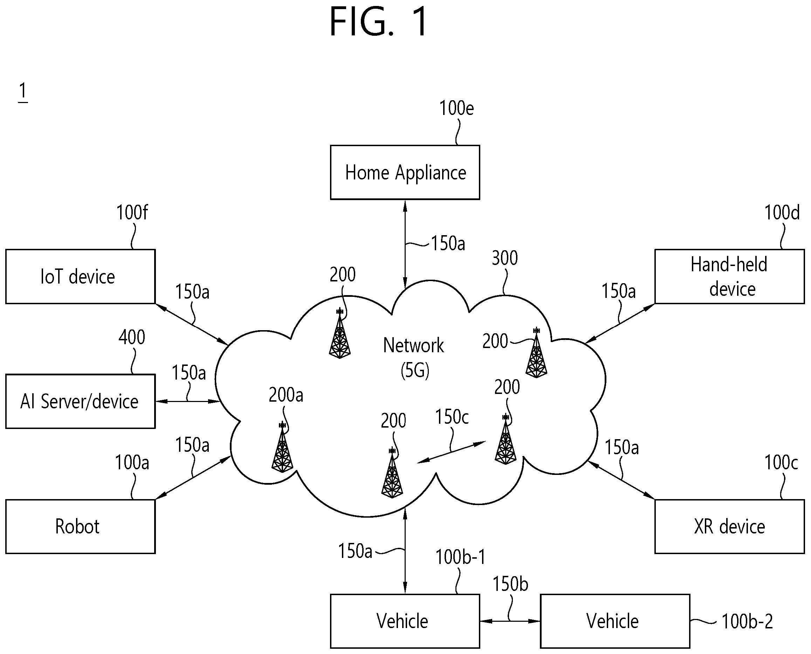

FIG. 1 shows an example of a communication system to which implementations of the present disclosure are applied.

The 5G usage scenarios shown in FIG. 1 are only exemplary, and the technical features of the present disclosure can be applied to other 5G usage scenarios which are not shown in FIG. 1.

Three main requirement categories for 5G include (1) a category of enhanced mobile broadband (eMBB), (2) a category of massive machine type communication (mMTC), and (3) a category of ultra-reliable and low latency communications (URLLC).

Referring to FIG. 1, the communication system 1 includes wireless devices 100a to 100f, base stations (BSs) 200, and a network 300. Although FIG. 1 illustrates a 5G network as an example of the network of the communication system 1, the implementations of the present disclosure are not limited to the 5G system, and can be applied to the future communication system beyond the 5G system.

The BSs 200 and the network 300 may be implemented as wireless devices and a specific wireless device may operate as a BS/network node with respect to other wireless devices.

The wireless devices 100a to 100f represent devices performing communication using radio access technology (RAT) (e.g., 5G new RAT (NR)) or LTE) and may be referred to as communication/radio/5G devices. The wireless devices 100a to 100f may include, without being limited to, a robot 100a, vehicles 100b-1 and 100b-2, an extended reality (XR) device 100c, a hand-held device 100d, a home appliance 100e, an IoT device 100f, and an artificial intelligence (AI) device/server 400. For example, the vehicles may include a vehicle having a wireless communication function, an autonomous driving vehicle, and a vehicle capable of performing communication between vehicles. The vehicles may include an unmanned aerial vehicle (UAV) (e.g., a drone). The XR device may include an AR/VR/Mixed Reality (MR) device and may be implemented in the form of a head-mounted device (HMD), a head-up display (HUD) mounted in a vehicle, a television, a smartphone, a computer, a wearable device, a home appliance device, a digital signage, a vehicle, a robot, etc. The hand-held device may include a smartphone, a smartpad, a wearable device (e.g., a smartwatch or a smartglasses), and a computer (e.g., a notebook). The home appliance may include a TV, a refrigerator, and a washing machine. The IoT device may include a sensor and a smartmeter.

In the present disclosure, the wireless devices 100a to 100f may be called user equipments (UEs). A UE may include, for example, a cellular phone, a smartphone, a laptop computer, a digital broadcast terminal, a personal digital assistant (PDA), a portable multimedia player (PMP), a navigation system, a slate personal computer (PC), a tablet PC, an ultrabook, a vehicle, a vehicle having an autonomous traveling function, a connected car, an UAV, an AI module, a robot, an AR device, a VR device, an MR device, a hologram device, a public safety device, an MTC device, an IoT device, a medical device, a FinTech device (or a financial device), a security device, a weather/environment device, a device related to a 5G service, or a device related to a fourth industrial revolution field.

The wireless devices 100a to 100f may be connected to the network 300 via the BSs 200. An AI technology may be applied to the wireless devices 100a to 100f and the wireless devices 100a to 100f may be connected to the AI server 400 via the network 300. The network 300 may be configured using a 3G network, a 4G (e.g., LTE) network, a 5G (e.g., NR) network, and a beyond-5G network. Although the wireless devices 100a to 100f may communicate with each other through the BSs 200/network 300, the wireless devices 100a to 100f may perform direct communication (e.g., sidelink communication) with each other without passing through the BSs 200/network 300. For example, the vehicles 100b-1 and 100b-2 may perform direct communication (e.g., vehicle-to-vehicle (V2V)/vehicle-to-everything (V2X) communication). The IoT device (e.g., a sensor) may perform direct communication with other IoT devices (e.g., sensors) or other wireless devices 100a to 100f.

Wireless communication/connections 150a, 150b and 150c may be established between the wireless devices 100a to 100f and/or between wireless device 100a to 100f and BS 200 and/or between BSs 200. Herein, the wireless communication/connections may be established through various RATs (e.g., 5G NR) such as uplink/downlink communication 150a, sidelink communication (or device-to-device (D2D) communication) 150b, inter-base station communication 150c (e.g., relay, integrated access and backhaul (IAB)), etc. The wireless devices 100a to 100f and the BSs 200/the wireless devices 100a to 100f may transmit/receive radio signals to/from each other through the wireless communication/connections 150a, 150b and 150c. For example, the wireless communication/connections 150a, 150b and 150c may transmit/receive signals through various physical channels. To this end, at least a part of various configuration information configuring processes, various signal processing processes (e.g., channel encoding/decoding, modulation/demodulation, and resource mapping/de-mapping), and resource allocating processes, for transmitting/receiving radio signals, may be performed based on the various proposals of the present disclosure.

NR supports multiples numerologies (and/or multiple subcarrier spacings (SCS)) to support various 5G services. For example, if SCS is 15 kHz, wide area can be supported in traditional cellular bands, and if SCS is 30 kHz/60 kHz, dense-urban, lower latency, and wider carrier bandwidth can be supported. If SCS is 60 kHz or higher, bandwidths greater than 24.25 GHz can be supported to overcome phase noise.

The NR frequency band may be defined as two types of frequency range, i.e., FR1 and FR2. The numerical value of the frequency range may be changed. For example, the frequency ranges of the two types (FR1 and FR2) may be as shown in Table 1 below. For ease of explanation, in the frequency ranges used in the NR system, FR1 may mean "sub 6 GHz range", FR2 may mean "above 6 GHz range," and may be referred to as millimeter wave (mmW).

**[Table 1]**

| Frequency Range designation | Corresponding frequency range | Subcarrier Spacing |
|---|---|---|
| FR1 | 450MHz - 6000MHz | 15, 30, 60kHz |
| FR2 | 24250MHz - 52600MHz | 60, 120, 240kHz |

As mentioned above, the numerical value of the frequency range of the NR system may be changed. For example, FR1 may include a frequency band of 410MHz to 7125MHz as shown in Table 2 below. That is, FR1 may include a frequency band of 6GHz (or 5850, 5900, 5925 MHz, etc.) or more. For example, a frequency band of 6 GHz (or 5850, 5900, 5925 MHz, etc.) or more included in FR1 may include an unlicensed band. Unlicensed bands may be used for a variety of purposes, for example for communication for vehicles (e.g., autonomous driving).

**[Table 2]**

| Frequency Range designation | Corresponding frequency range | Subcarrier Spacing |
|---|---|---|
| FR1 | 410MHz - 7125MHz | 15, 30, 60kHz |
| FR2 | 24250MHz - 52600MHz | 60, 120, 240kHz |

Here, the radio communication technologies implemented in the wireless devices in the present disclosure may include narrowband internet-of-things (NB-IoT) technology for low-power communication as well as LTE, NR and 6G. For example, NB-IoT technology may be an example of low power wide area network (LPWAN) technology, may be implemented in specifications such as LTE Cat NB1 and/or LTE Cat NB2, and may not be limited to the above-mentioned names. Additionally, and/or alternatively, the radio communication technologies implemented in the wireless devices in the present disclosure may communicate based on LTE-M technology. For example, LTE-M technology may be an example of LPWAN technology and be called by various names such as enhanced machine type communication (eMTC). For example, LTE-M technology may be implemented in at least one of the various specifications, such as 1) LTE Cat 0, 2) LTE Cat M1, 3) LTE Cat M2, 4) LTE non-bandwidth limited (non-BL), 5) LTE-MTC, 6) LTE Machine Type Communication, and/or 7) LTE M, and may not be limited to the above-mentioned names. Additionally, and/or alternatively, the radio communication technologies implemented in the wireless devices in the present disclosure may include at least one of ZigBee, Bluetooth, and/or LPWAN which take into account low-power communication, and may not be limited to the above-mentioned names. For example, ZigBee technology may generate personal area networks (PANs) associated with small/low-power digital communication based on various specifications such as IEEE 802.15.4 and may be called various names.

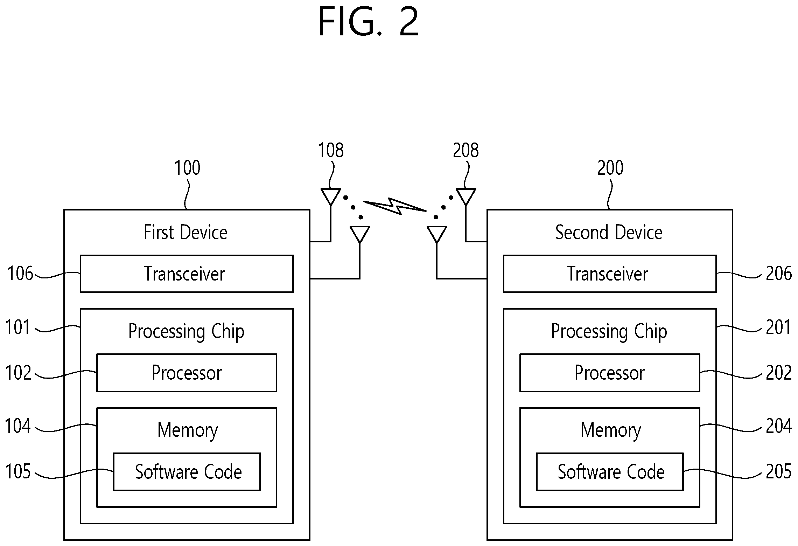

FIG. 2 shows an example of wireless devices to which implementations of the present disclosure are applied.

In FIG. 2, The first wireless device 100 and/or the second wireless device 200 may be implemented in various forms according to use cases/services. For example, {the first wireless device 100 and the second wireless device 200} may correspond to at least one of {the wireless device 100a to 100f and the BS 200}, {the wireless device 100a to 100f and the wireless device 100a to 100f} and/or {the BS 200 and the BS 200} of FIG. 1. The first wireless device 100 and/or the second wireless device 200 may be configured by various elements, devices/parts, and/or modules.

The first wireless device 100 may include at least one transceiver, such as a transceiver 106, at least one processing chip, such as a processing chip 101, and/or one or more antennas 108.

The processing chip 101 may include at least one processor, such a processor 102, and at least one memory, such as a memory 104. Additional and/or alternatively, the memory 104 may be placed outside of the processing chip 101.

The processor 102 may control the memory 104 and/or the transceiver 106 and may be adapted to implement the descriptions, functions, procedures, suggestions, methods and/or operational flowcharts described in the present disclosure. For example, the processor 102 may process information within the memory 104 to generate first information/signals and then transmit radio signals including the first information/signals through the transceiver 106. The processor 102 may receive radio signals including second information/signals through the transceiver 106 and then store information obtained by processing the second information/signals in the memory 104.

The memory 104 may be operably connectable to the processor 102. The memory 104 may store various types of information and/or instructions. The memory 104 may store a firmware and/or a software code 105 which implements codes, commands, and/or a set of commands that, when executed by the processor 102, perform the descriptions, functions, procedures, suggestions, methods and/or operational flowcharts disclosed in the present disclosure. For example, the firmware and/or the software code 105 may implement instructions that, when executed by the processor 102, perform the descriptions, functions, procedures, suggestions, methods and/or operational flowcharts disclosed in the present disclosure. For example, the firmware and/or the software code 105 may control the processor 102 to perform one or more protocols. For example, the firmware and/or the software code 105 may control the processor 102 to perform one or more layers of the radio interface protocol.

Herein, the processor 102 and the memory 104 may be a part of a communication modem/circuit/chip designed to implement RAT (e.g., LTE or NR). The transceiver 106 may be connected to the processor 102 and transmit and/or receive radio signals through one or more antennas 108. Each of the transceiver 106 may include a transmitter and/or a receiver. The transceiver 106 may be interchangeably used with Radio Frequency (RF) unit(s). In the present disclosure, the first wireless device 100 may represent a communication modem/circuit/chip.

The second wireless device 200 may include at least one transceiver, such as a transceiver 206, at least one processing chip, such as a processing chip 201, and/or one or more antennas 208.

The processing chip 201 may include at least one processor, such a processor 202, and at least one memory, such as a memory 204. Additional and/or alternatively, the memory 204 may be placed outside of the processing chip 201.

The processor 202 may control the memory 204 and/or the transceiver 206 and may be adapted to implement the descriptions, functions, procedures, suggestions, methods and/or operational flowcharts described in the present disclosure. For example, the processor 202 may process information within the memory 204 to generate third information/signals and then transmit radio signals including the third information/signals through the transceiver 206. The processor 202 may receive radio signals including fourth information/signals through the transceiver 106 and then store information obtained by processing the fourth information/signals in the memory 204.

The memory 204 may be operably connectable to the processor 202. The memory 204 may store various types of information and/or instructions. The memory 204 may store a firmware and/or a software code 205 which implements codes, commands, and/or a set of commands that, when executed by the processor 202, perform the descriptions, functions, procedures, suggestions, methods and/or operational flowcharts disclosed in the present disclosure. For example, the firmware and/or the software code 205 may implement instructions that, when executed by the processor 202, perform the descriptions, functions, procedures, suggestions, methods and/or operational flowcharts disclosed in the present disclosure. For example, the firmware and/or the software code 205 may control the processor 202 to perform one or more protocols. For example, the firmware and/or the software code 205 may control the processor 202 to perform one or more layers of the radio interface protocol.

Herein, the processor 202 and the memory 204 may be a part of a communication modem/circuit/chip designed to implement RAT (e.g., LTE or NR). The transceiver 206 may be connected to the processor 202 and transmit and/or receive radio signals through one or more antennas 208. Each of the transceiver 206 may include a transmitter and/or a receiver. The transceiver 206 may be interchangeably used with RF unit. In the present disclosure, the second wireless device 200 may represent a communication modem/circuit/chip.

Hereinafter, hardware elements of the wireless devices 100 and 200 will be described more specifically. One or more protocol layers may be implemented by, without being limited to, one or more processors 102 and 202. For example, the one or more processors 102 and 202 may implement one or more layers (e.g., functional layers such as Physical (PHY) layer, Media Access Control (MAC) layer, Radio Link Control (RLC) layer, Packet Data Convergence Protocol (PDCP) layer, Radio Resource Control (RRC) layer, and Service Data Adaptation Protocol (SDAP) layer). The one or more processors 102 and 202 may generate one or more Protocol Data Units (PDUs), one or more Service Data Unit (SDUs), messages, control information, data, or information according to the descriptions, functions, procedures, suggestions, methods and/or operational flowcharts disclosed in the present disclosure. The one or more processors 102 and 202 may generate signals (e.g., baseband signals) including PDUs, SDUs, messages, control information, data, or information according to the descriptions, functions, procedures, suggestions, methods and/or operational flowcharts disclosed in the present disclosure and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the descriptions, functions, procedures, suggestions, methods and/or operational flowcharts disclosed in the present disclosure.

The one or more processors 102 and 202 may be referred to as controllers, microcontrollers, microprocessors, or microcomputers. The one or more processors 102 and 202 may be implemented by hardware, firmware, software, or a combination thereof. As an example, one or more Application Specific Integrated Circuits (ASICs), one or more Digital Signal Processors (DSPs), one or more Digital Signal Processing Devices (DSPDs), one or more Programmable Logic Devices (PLDs), or one or more Field Programmable Gate Arrays (FPGAs) may be included in the one or more processors 102 and 202. For example, the one or more processors 102 and 202 may be configured by a set of a communication control processor, an Application Processor (AP), an Electronic Control Unit (ECU), a Central Processing Unit (CPU), a Graphic Processing Unit (GPU), and a memory control processor. The one or more memories 104 and 204 may be connected to the one or more processors 102 and 202 and store various types of data, signals, messages, information, programs, code, instructions, and/or commands. The one or more memories 104 and 204 may be configured by Random Access Memory (RAM), Dynamic RAM (DRAM), Read-Only Memory (ROM), electrically Erasable Programmable Read-Only Memory (EPROM), flash memory, volatile memory, non-volatile memory, hard drive, register, cash memory, computer-readable storage medium, and/or combinations thereof. The one or more memories 104 and 204 may be located at the interior and/or exterior of the one or more processors 102 and 202. The one or more memories 104 and 204 may be connected to the one or more processors 102 and 202 through various technologies such as wired or wireless connection.

The one or more transceivers 106 and 206 may transmit user data, control information, and/or radio signals/channels, mentioned in the descriptions, functions, procedures, suggestions, methods and/or operational flowcharts disclosed in the present disclosure, to one or more other devices. The one or more transceivers 106 and 206 may receive user data, control information, and/or radio signals/channels, mentioned in the descriptions, functions, procedures, suggestions, methods and/or operational flowcharts disclosed in the present disclosure, from one or more other devices. For example, the one or more transceivers 106 and 206 may be connected to the one or more processors 102 and 202 and transmit and receive radio signals. For example, the one or more processors 102 and 202 may perform control so that the one or more transceivers 106 and 206 may transmit user data, control information, or radio signals to one or more other devices. The one or more processors 102 and 202 may perform control so that the one or more transceivers 106 and 206 may receive user data, control information, or radio signals from one or more other devices.

The one or more transceivers 106 and 206 may be connected to the one or more antennas 108 and 208. Additionally, and/or alternatively, the one or more transceivers 106 and 206 may include one or more antennas 108 and 208. The one or more transceivers 106 and 206 may be adapted to transmit and receive user data, control information, and/or radio signals/channels, mentioned in the descriptions, functions, procedures, suggestions, methods and/or operational flowcharts disclosed in the present disclosure, through the one or more antennas 108 and 208. In the present disclosure, the one or more antennas 108 and 208 may be a plurality of physical antennas or a plurality of logical antennas (e.g., antenna ports).

The one or more transceivers 106 and 206 may convert received user data, control information, radio signals/channels, etc., from RF band signals into baseband signals in order to process received user data, control information, radio signals/channels, etc., using the one or more processors 102 and 202. The one or more transceivers 106 and 206 may convert the user data, control information, radio signals/channels, etc., processed using the one or more processors 102 and 202 from the base band signals into the RF band signals. To this end, the one or more transceivers 106 and 206 may include (analog) oscillators and/or filters. For example, the one or more transceivers 106 and 206 can up-convert OFDM baseband signals to OFDM signals by their (analog) oscillators and/or filters under the control of the one or more processors 102 and 202 and transmit the up-converted OFDM signals at the carrier frequency. The one or more transceivers 106 and 206 may receive OFDM signals at a carrier frequency and downconvert the OFDM signals into OFDM baseband signals by their (analog) oscillators and/or filters under the control of the one or more processors 102 and 202.

Although not shown in FIG. 2, the wireless devices 100 and 200 may further include additional components. The additional components 140 may be variously configured according to types of the wireless devices 100 and 200. For example, the additional components 140 may include at least one of a power unit/battery, an Input/Output (I/O) device (e.g., audio I/O port, video I/O port), a driving device, and a computing device. The additional components 140 may be coupled to the one or more processors 102 and 202 via various technologies, such as a wired or wireless connection.

In the implementations of the present disclosure, a UE may operate as a transmitting device in UL and as a receiving device in DL. In the implementations of the present disclosure, a BS may operate as a receiving device in UL and as a transmitting device in DL. Hereinafter, for convenience of description, it is mainly assumed that the first wireless device 100 acts as the UE, and the second wireless device 200 acts as the BS. For example, the processor(s) 102 connected to, mounted on or launched in the first wireless device 100 may be adapted to perform the UE behavior according to an implementation of the present disclosure or control the transceiver(s) 106 to perform the UE behavior according to an implementation of the present disclosure. The processor(s) 202 connected to, mounted on or launched in the second wireless device 200 may be adapted to perform the BS behavior according to an implementation of the present disclosure or control the transceiver(s) 206 to perform the BS behavior according to an implementation of the present disclosure.

In the present disclosure, a BS is also referred to as a node B (NB), an eNode B (eNB), or a gNB.

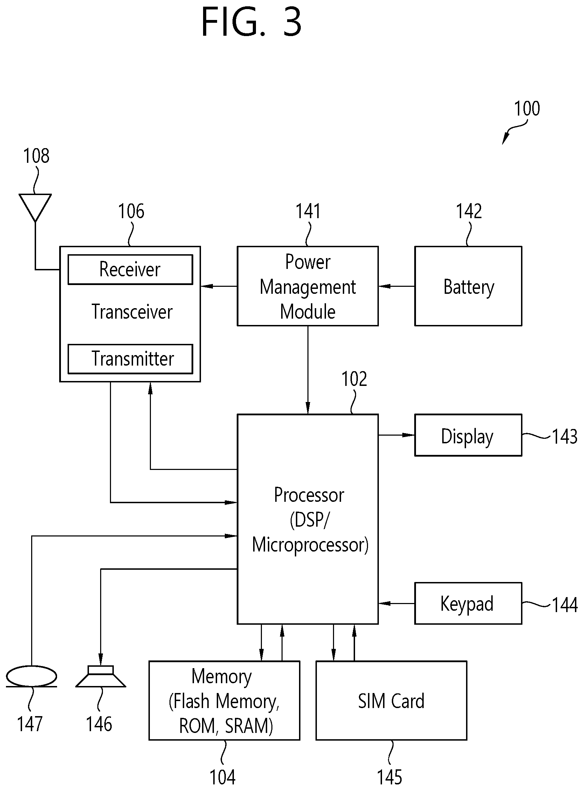

FIG. 3 shows an example of UE to which implementations of the present disclosure are applied.

Referring to FIG. 3, a UE 100 may correspond to the first wireless device 100 of FIG. 2.

A UE 100 includes a processor 102, a memory 104, a transceiver 106, one or more antennas 108, a power management module 141, a battery 142, a display 143, a keypad 144, a Subscriber Identification Module (SIM) card 145, a speaker 146, and a microphone 147.

The processor 102 may be adapted to implement the descriptions, functions, procedures, suggestions, methods and/or operational flowcharts disclosed in the present disclosure. The processor 102 may be adapted to control one or more other components of the UE 100 to implement the descriptions, functions, procedures, suggestions, methods and/or operational flowcharts disclosed in the present disclosure. Layers of the radio interface protocol may be implemented in the processor 102. The processor 102 may include ASIC, other chipset, logic circuit and/or data processing device. The processor 102 may be an application processor. The processor 102 may include at least one of DSP, CPU, GPU, a modem (modulator and demodulator). An example of the processor 102 may be found in SNAPDRAGON^{™} series of processors made by Qualcomm^{®}, EXYNOS^{™} series of processors made by Samsung^{®}, A series of processors made by Apple^{®}, HELIO^{™} series of processors made by MediaTek^{®}, ATOM^{™} series of processors made by Intel^{®} or a corresponding next generation processor.

The memory 104 is operatively coupled with the processor 102 and stores a variety of information to operate the processor 102. The memory 104 may include ROM, RAM, flash memory, memory card, storage medium and/or other storage device. When the embodiments are implemented in software, the techniques described herein can be implemented with modules (e.g., procedures, functions, etc.) that perform the descriptions, functions, procedures, suggestions, methods and/or operational flowcharts disclosed in the present disclosure. The modules can be stored in the memory 104 and executed by the processor 102. The memory 104 can be implemented within the processor 102 or external to the processor 102 in which case those can be communicatively coupled to the processor 102 via various means as is known in the art.

The transceiver 106 is operatively coupled with the processor 102, and transmits and/or receives a radio signal. The transceiver 106 includes a transmitter and a receiver. The transceiver 106 may include baseband circuitry to process radio frequency signals. The transceiver 106 controls the one or more antennas 108 to transmit and/or receive a radio signal.

The power management module 141 manages power for the processor 102 and/or the transceiver 106. The battery 142 supplies power to the power management module 141.

The display 143 outputs results processed by the processor 102. The keypad 144 receives inputs to be used by the processor 102. The keypad 144 may be shown on the display 143.

The SIM card 145 is an integrated circuit that is intended to securely store the International Mobile Subscriber Identity (IMSI) number and its related key, which are used to identify and authenticate subscribers on mobile telephony devices (such as mobile phones and computers). It is also possible to store contact information on many SIM cards.

The speaker 146 outputs sound-related results processed by the processor 102. The microphone 147 receives sound-related inputs to be used by the processor 102.

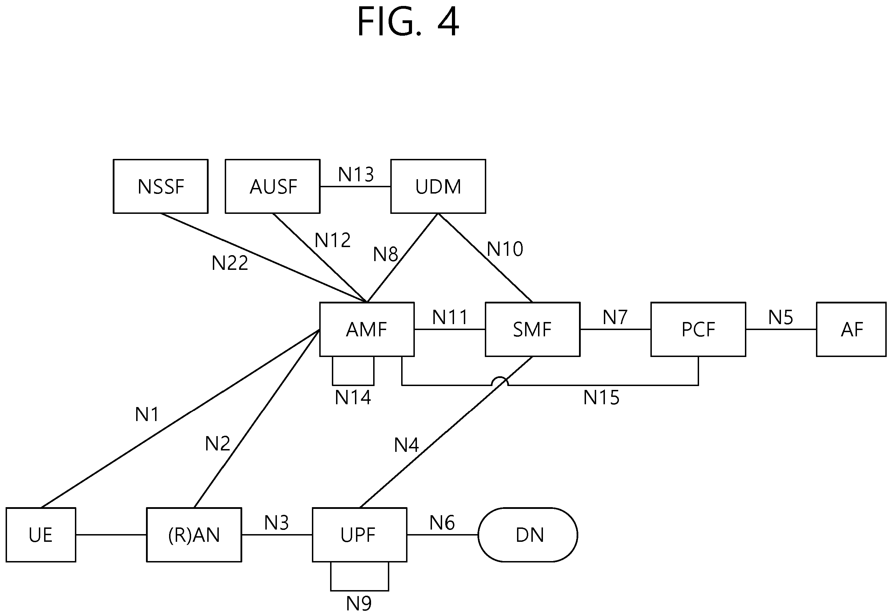

FIG. 4 shows an example of 5G system architecture to which implementations of the present disclosure are applied.

The 5G system (5GS) architecture consists of the following network functions (NF).
- Authentication Server Function (AUSF)
- Access and Mobility Management Function (AMF)
- Data Network (DN), e.g., operator services, Internet access or 3rd party services
- Unstructured Data Storage Function (UDSF)
- Network Exposure Function (NEF)
- Intermediate NEF (I-NEF)
- Network Repository Function (NRF)
- Network Slice Selection Function (NSSF)
- Policy Control Function (PCF)
- Session Management Function (SMF)
- Unified Data Management (UDM)
- Unified Data Repository (UDR)
- User Plane Function (UPF)
- UE radio Capability Management Function (UCMF)
- Application Function (AF)
- User Equipment (UE)
- (Radio) Access Network ((R)AN)
- 5G-Equipment Identity Register (5G-EIR)
- Network Data Analytics Function (NWDAF)
- CHarging Function (CHF)

Furthermore, the following network functions may be considered.
- Non-3GPP InterWorking Function (N3IWF)
- Trusted Non-3GPP Gateway Function (TNGF)
- Wireline Access Gateway Function (W-AGF)

FIG. 4 depicts the 5G system architecture in the non-roaming case, using the reference point representation showing how various network functions interact with each other.

In FIG. 4, for the sake of clarity of the point-to-point diagrams, the UDSF, NEF and NRF have not been depicted. However, all depicted Network Functions can interact with the UDSF, UDR, NEF and NRF as necessary.

For clarity, the UDR and its connections with other NFs, e.g., PCF, are not depicted in FIG. 4. For clarity, the NWDAF and its connections with other NFs, e.g., PCF, are not depicted in FIG. 4.

The 5G system architecture contains the following reference points:
- N1: Reference point between the UE and the AMF.
- N2: Reference point between the (R)AN and the AMF.
- N3: Reference point between the (R)AN and the UPF.
- N4: Reference point between the SMF and the UPF.
- N6: Reference point between the UPF and a Data Network.
- N9: Reference point between two UPFs.

The following reference points show the interactions that exist between the NF services in the NFs.
- N5: Reference point between the PCF and an AF.
- N7: Reference point between the SMF and the PCF.
- N8: Reference point between the UDM and the AMF.
- N10: Reference point between the UDM and the SMF.
- N11: Reference point between the AMF and the SMF.
- N12: Reference point between the AMF and the AUSF.
- N13: Reference point between the UDM and the AUSF.
- N14: Reference point between two AMFs.
- N15: Reference point between the PCF and the AMF in the case of non-roaming scenario, PCF in the visited network and AMF in the case of roaming scenario.
- N16: Reference point between two SMFs, (in roaming case between SMF in the visited network and the SMF in the home network).
- N22: Reference point between the AMF and the NSSF.

In some cases, a couple of NFs may need to be associated with each other to serve a UE.

A registration procedure is described. Reference may be made to section 4.2.2.2 of 3GPP TS 23.502 V16.3.0 (2019-12).

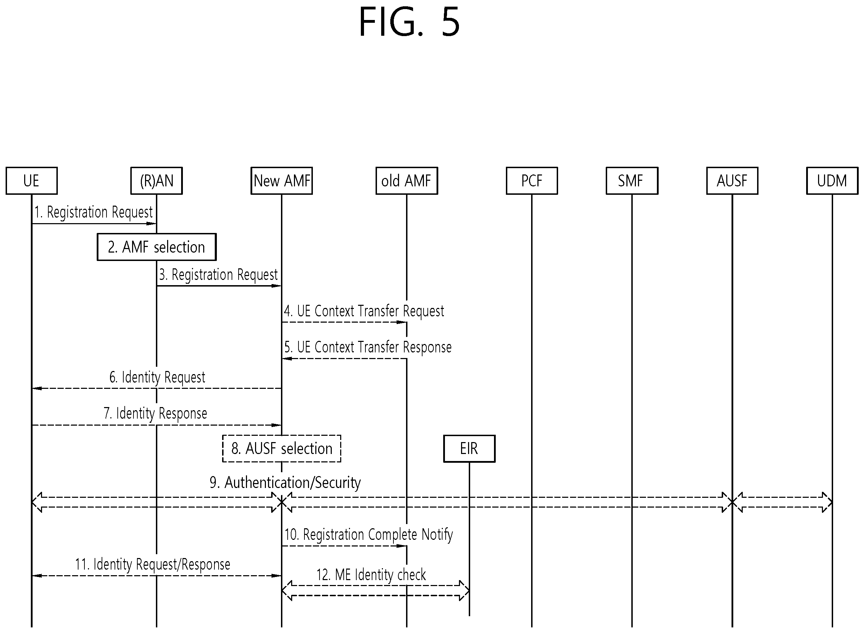

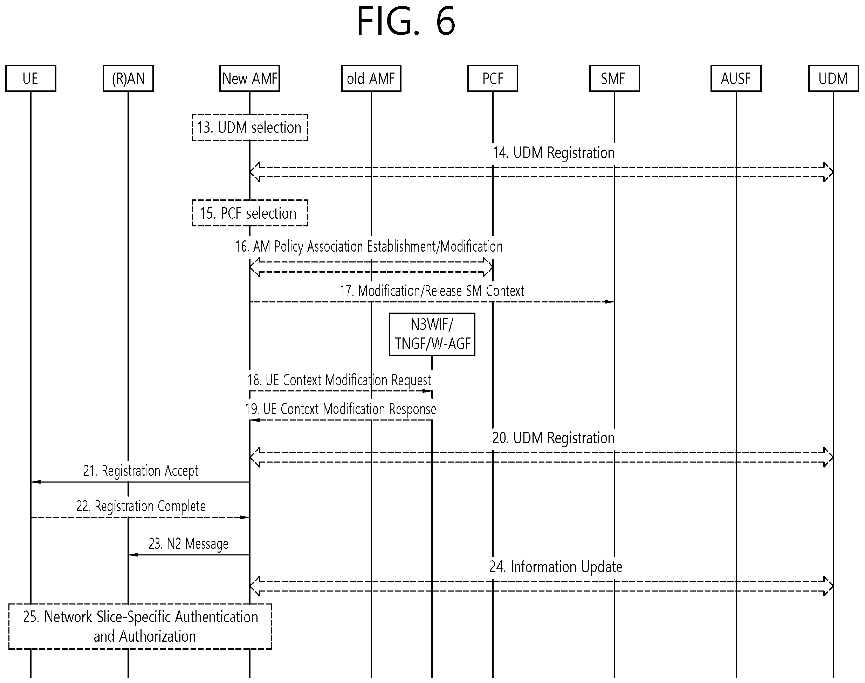

FIGS. 5 and 6 show an example of a registration procedure to which implementations of the present disclosure are applied.

A UE needs to register with the network to get authorized to receive services, to enable mobility tracking and to enable reachability. The UE initiates the registration procedure using one of the following registration types:
- Initial registration to the 5GS; or
- Mobility registration update; or
- Periodic registration update; or
- Emergency registration.

The general registration procedure in FIGS. 5 and 6 applies on all these registration procedures, but the periodic registration update need not include all parameters that are used in other registration cases.

The general registration procedure in FIGS. 5 and 6 is also used for the case of registration in 3GPP access when the UE is already registered in a non-3GPP access, and vice versa. Registration in 3GPP access when the UE is already registered in a non-3GPP access scenario may require an AMF change.

First, procedures of FIG. 5 are described.
(1) Step 1: The UE transmits a Registration Request message to the (R)AN. The Registration Request message corresponds to AN message.

The Registration Request message may include AN parameters. In the case of NG-RAN, the AN parameters include, e.g., 5G SAE temporary mobile subscriber identity (5G-S-TMSI) or globally unique AMF ID (GUAMI), the selected public land mobile network (PLMN) ID (or PLMN ID and network identifier (NID)) and Requested network slice selection assistance information (NSSAI). The AN parameters also include establishment cause. The establishment cause provides the reason for requesting the establishment of an RRC connection. Whether and how the UE includes the Requested NSSAI as part of the AN parameters is dependent on the value of the access stratum connection establishment NSSAI inclusion mode parameter.

The Registration Request message may include a registration type. The registration type indicates if the UE wants to perform an initial registration (i.e., the UE is in RM-DEREGISTERED state), a mobility registration update (i.e., the UE is in RM-REGISTERED state and initiates a registration procedure due to mobility or due to the UE needs to update its capabilities or protocol parameters, or to request a change of the set of network slices it is allowed to use), a periodic registration update (i.e., the UE is in RM-REGISTERED state and initiates a registration procedure due to the periodic registration update timer expiry) or an emergency registration (i.e., the UE is in limited service state).

When the UE is performing an initial registration, the UE shall indicate its UE identity in the Registration Request message as follows, listed in decreasing order of preference:
i) a 5G globally unique temporary identifier (5G-GUTI) mapped from an evolved packet system (EPS) GUTI, if the UE has a valid EPS GUTI.
ii) a native 5G-GUTI allocated by the PLMN to which the UE is attempting to register, if available;
iii) a native 5G-GUTI allocated by an equivalent PLMN to the PLMN to which the UE is attempting to register, if available;
iv) a native 5G-GUTI allocated by any other PLMN, if available.
v) Otherwise, the UE shall include its subscriber concealed identifier (SUCI) in the Registration Request message.

When the UE performing an initial registration has both a valid EPS GUTI and a native 5G-GUTI, the UE shall also indicate the native 5G-GUTI as additional GUTI. If more than one native 5G-GUTIs are available, the UE shall select the 5G-GUTI in decreasing order of preference among items (ii)-(iv) in the list above.

When the UE is performing an initial registration with a native 5G-GUTI, then the UE shall indicate the related GUAMI information in the AN parameters. When the UE is performing an initial registration with its SUCI, the UE shall not indicate any GUAMI information in the AN parameters.

For an emergency registration, the SUCI shall be included if the UE does not have a valid 5G-GUTI available; the permanent equipment identifier (PEI) shall be included when the UE has no subscriber permanent identifier (SUPI) and no valid 5G-GUTI. In other cases, the 5G-GUTI is included, and it indicates the last serving AMF.

The Registration Request message may also include security parameters, PDU Session Status, etc. The security parameters are used for authentication and integrity protection. The PDU Session Status indicates the previously established PDU sessions in the UE. When the UE is connected to the two AMFs belonging to different PLMN via 3GPP access and non-3GPP access then the PDU Session status indicates the established PDU Session of the current PLMN in the UE.

(2) Step 2: The (R)AN selects an AMF.

If a 5G-S-TMSI or GUAMI is not included or the 5G-S-TMSI or GUAMI does not indicate a valid AMF, the (R)AN, based on (R)AT and requested NSSAI, if available, selects an AMF.

If UE is in CM-CONNECTED state, the (R)AN can forward the Registration Request message to the AMF based on the N2 connection of the UE.

If the (R)AN cannot select an appropriate AMF, it forwards the Registration Request message to an AMF which has been configured, in the (R)AN, to perform AMF selection.

(3) Step 3: The (R)AN transmits a Registration Request message to the new AMF. The Registration Request message corresponds to N2 message.

The Registration Request message may include whole information and/or a part of information included in the Registration Request message received from the UE which is described in step 1.

The Registration Request message may include N2 parameters. When NG-RAN is used, the N2 parameters include the selected PLMN ID (or PLMN ID and NID), location information and cell identity related to the cell in which the UE is camping, UE context request which indicates that a UE context including security information needs to be setup at the NG-RAN. When NG-RAN is used, the N2 parameters shall also include the establishment cause.

If the Registration type indicated by the UE is Periodic Registration Update, then steps 4 to 19 may be omitted.
(4) Step 4: If the UE's 5G-GUTI was included in the Registration Request message and the serving AMF has changed since last registration procedure, the new AMF may invoke the Namf_Communication_UEContextTransfer service operation on the old AMF including the complete registration request non-access stratum (NAS) message to request the UE's SUPI and UE context.
(5) Step 5: The Old AMF may respond to the new AMF for the Namf_Communication_UEContextTransfer invocation by including the UE's SUPI and UE context.
(6) Step 6: If the SUCI is not provided by the UE nor retrieved from the old AMF, the identity request procedure may be initiated by the new AMF sending the Identity Request message to the UE requesting the SUCI.
(7) Step 7: The UE may respond with an Identity Response message including the SUCI. The UE derives the SUCI by using the provisioned public key of the home PLMN (HPLMN).
(8) Step 8: The new AMF may decide to initiate UE authentication by invoking an AUSF. In that case, the new AMF selects an AUSF based on SUPI or SUCI.
(9) Step 9: Authentication/security may be established by the UE, new AMF, AUSF and/or UDM.
(10) Step 10: If the AMF has changed, the new AMF may notify the old AMF that the registration of the UE in the new AMF is completed by invoking the Namf_Communication_RegistrationCompleteNotify service operation. If the authentication/security procedure fails, then the registration shall be rejected, and the new AMF may invoke the Namf_Communication_RegistrationCompleteNotify service operation with a reject indication reason code towards the old AMF. The old AMF may continue as if the UE context transfer service operation was never received.
(11) Step 11: If the PEI was not provided by the UE nor retrieved from the old AMF, the Identity Request procedure may be initiated by the new AMF sending an Identity Request message to the UE to retrieve the PEI. The PEI shall be transferred encrypted unless the UE performs emergency registration and cannot be authenticated.
(12) Step 12: Optionally, the new AMF may initiate ME identity check by invoking the N5g-eir_EquipmentIdentityCheck_Get service operation.

Now, procedures of FIG. 6, which follow the procedures of FIG. 5, are described.
(13) Step 13: If step 14 below is to be performed, the new AMF, based on the SUPI, may select a UDM, then UDM may select a UDR instance.
(14) Step 14: The new AMF may register with the UDM.
(15) Step 15: The new AMF may select a PCF.
(16) Step 16: The new AMF may optionally perform an AM Policy Association Establishment/Modification.
(17) Step 17: The new AMF may transmit Update/Release SM Context message (e.g., Nsmf_PDUSession_UpdateSMContext and/or Nsmf_PDUSession_ReleaseSMContext) to the SMF.
(18) Step 18: If the new AMF and the old AMF are in the same PLMN, the new AMF may send a UE Context Modification Request to the N3IWF/TNGF/W-AGF.
(19) Step 19: The N3IWF/TNGF/W-AGF may send a UE Context Modification Response to the new AMF.
(20) Step 20: After the new AMF receives the response message from the N3IWF/TNGF/W-AGF in step 19, the new AMF may register with the UDM.
(21) Step 21: The new AMF transmits a Registration Accept message to the UE.

The new AMF sends a Registration Accept message to the UE indicating that the Registration Request has been accepted. 5G-GUTI is included if the new AMF allocates a new 5G-GUTI. If the UE is already in RM-REGISTERED state via another access in the same PLMN, the UE shall use the 5G-GUTI received in the Registration Accept message for both registrations. If no 5G-GUTI is included in the Registration Accept message, then the UE uses the 5G-GUTI allocated for the existing registration also for the new registration. If the new AMF allocates a new registration area, it shall send the registration area to the UE via Registration Accept message. If there is no registration area included in the Registration Accept message, the UE shall consider the old registration area as valid. Mobility Restrictions is included in case mobility restrictions applies for the UE and registration type is not emergency registration. The new AMF indicates the established PDU sessions to the UE in the PDU Session status. The UE removes locally any internal resources related to PDU sessions that are not marked as established in the received PDU Session status. When the UE is connected to the two AMFs belonging to different PLMN via 3GPP access and non-3GPP access then the UE removes locally any internal resources related to the PDU session of the current PLMN that are not marked as established in received PDU Session status. If the PDU Session status information was in the Registration Request message, the new AMF shall indicate the PDU Session status to the UE.

The Allowed NSSAI provided in the Registration Accept message is valid in the registration area and it applies for all the PLMNs which have their tracking areas included in the registration area. The Mapping Of Allowed NSSAI is the mapping of each S-NSSAI of the Allowed NSSAI to the HPLMN S-NSSAIs. The Mapping Of Configured NSSAI is the mapping of each S-NSSAI of the Configured NSSAI for the serving PLMN to the HPLMN S-NSSAIs.

Furthermore, optionally the new AMF performs a UE Policy Association Establishment.

(22) Step 22: The UE may send a Registration Complete message to the new AMF when it has successfully updated itself.

The UE may send a Registration Complete message to the new AMF to acknowledge if a new 5G-GUTI was allocated.
(23) Step 23: For registration over 3GPP Access, if the new AMF does not release the signaling connection, the new AMF may send the RRC Inactive Assistance Information to the NG-RAN. For registration over non-3GPP Access, if the UE is also in CM-CONNECTED state on 3GPP access, the new AMF may send the RRC Inactive Assistance Information to the NG-RAN.
(24) Step 24: The new AMF may perform information update towards the UDM.
(25) Step 25: The UE may execute Network Slice-Specific Authentication and Authorization (NSSAA) procedure.

### <Network Slice>

Hereinafter, network slicing to be introduced in next-generation mobile communication will be described.

Next-generation mobile communication introduces the concept of network slicing in order to provide various services through one network. Here, the network slicing is a combination of network nodes having functions necessary to provide a specific service. A network node constituting a slice instance may be a hardware independent node or a logically independent node.

Each slice instance may be composed of a combination of all nodes necessary to configure the entire network. In this case, one slice instance may independently provide a service to the UE.

Alternatively, the slice instance may be composed of a combination of some nodes among nodes constituting the network. In this case, the slice instance may not provide a service to the UE alone, but may provide a service to the UE in association with other existing network nodes. In addition, a plurality of slice instances may provide a service to the UE in association with each other.

A slice instance is different from a dedicated core network in that the entire network node including the Core Network (CN) node and the RAN can be separated. In addition, a slice instance is different from a dedicated core network in that network nodes can simply be logically separated.

For reference, for a network slice, quota may be used.

For example, a quota related to a network slice may include a quota for the maximum number of UEs. The quota for the maximum number of UEs may mean the maximum number of terminals that can use a network slice at the same time. As an example, each network slice information may include quota information for the maximum number of UEs (e.g., 10 pieces, 1000000 pieces, etc.).

For example, a quota related to a network slice may include a quota for the maximum number of PDU sessions. The quota for the maximum number of PDU sessions may mean the maximum number of concurrent PDU sessions supported in the network slice. For example, the maximum number of concurrent (concurrent) PDU sessions supported in a network slice may mean the maximum number of PDU sessions established at the same time in one network slice related to a DNN (Data Network Name) defined by S-NSSAI.

In 5G mobile communication, network slice quota event notification may be supported in the network slice. For example, event notification about a quota related to a network slice may be supported. For example, an AF may request an event notification about a quota related to a network slice in 5GS. Then, AF may be notified of quota for attributes related to network slices in 5GS. For example, 5GS may inform the AF whether the quota for a particular attribute has reached a specified threshold. AF may then influence the 5GS routing decision.

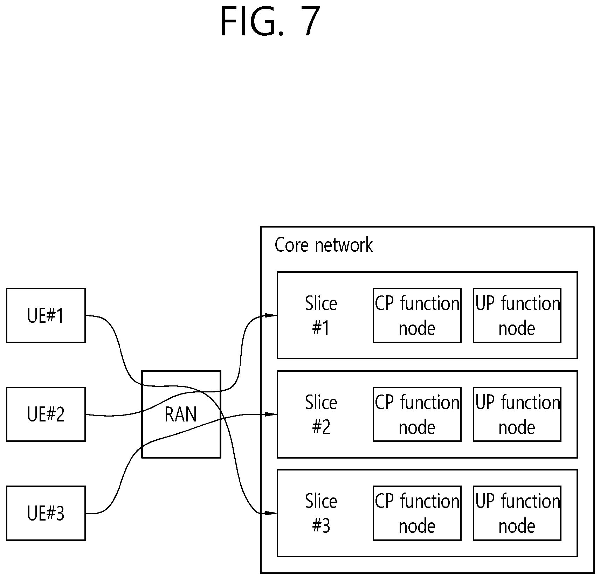

FIG. 7 is an exemplary diagram illustrating an example of an architecture for implementing the concept of network slicing.

As can be seen with reference to FIG. 7, the Core Network (CN) may be divided into several slice instances. Each slice instance may include one or more of a CP function node and a UP function node.

Each UE may use a network slice instance suitable for its own service through the RAN.

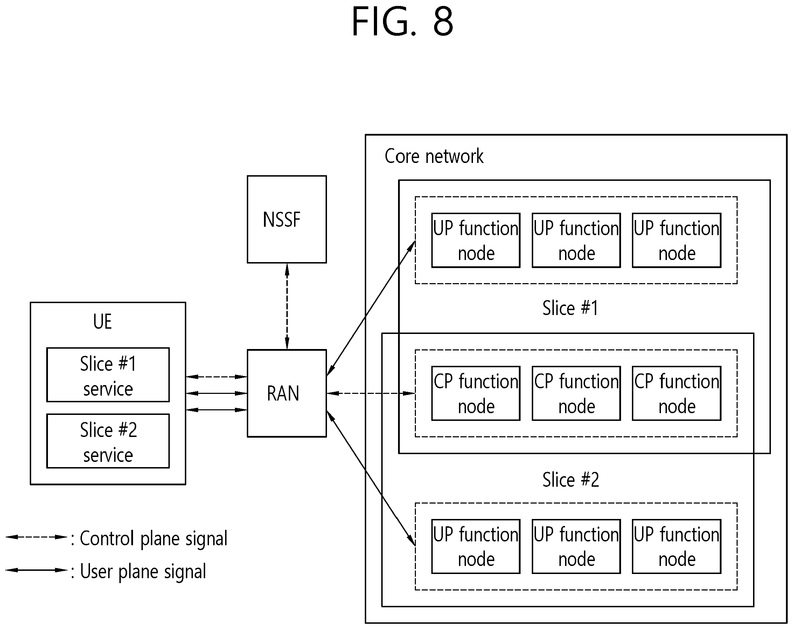

Unlike shown in FIG. 7, each slice instance may share one or more of a CP function node and a UP function node with another slice instance. This will be described with reference to FIG. 8 as follows.

FIG. 8 is an exemplary diagram illustrating another example of an architecture for implementing the concept of network slicing.

Referring to FIG. 8, a plurality of UP functional nodes is clustered, and similarly, a plurality of CP functional nodes is also clustered.

And, referring to FIG. 8, slice instance #1 (or referred to as instance #1) in the core network includes the first cluster of UP functional nodes. And, the slice instance #1 shares a cluster of CP functional nodes with slice #2 (or referred to as instance #2). The slice instance #2 includes a second cluster of UP functional nodes.

The illustrated NSSF selects a slice (or instance) that can accommodate the service of the UE.

The illustrated UE may use service #1 through the slice instance #1 selected by the NSSF, and may use service #2 through the slice instance #2 selected by the NSSF.

Service areas related to network slice may be supported. For example, Network Slice (NS)-Area of Service (AoS) is being discussed.

For example, the network (e.g., AMF, base station, etc.) may transmit S-NSSAI location availability information to the UE.

The Single-Network Slice Selection Assistance Information (S-NSSAI) location availability information transmitted to the UE may include location information for each corresponding S-NSSAI of the configured NSSAI. Here, the location information may indicate a cell within a Registration Area (RA) that may use the relevant S-NSSAI when the S-NSSAI is unavailable in all cells of the Tracking Area (TA).

To meet these requirements, the UE's NAS layer must know whether the UE is within the NS-AoS. Two Alternatives may exist:
Alternative 1. The UE's NAS layer passes S-NSSAI location availability information to the UE's AS layer. Based on the S-NSSAI location availability and the UE's serving cell, the AS layer may indicate to the NAS layer whether the UE is inside or outside the NS-AoS.
Alternative 2. The UE's NAS layer may receive the UE's serving cell information from the UE's AS layer. According to the prior arts, Alternative 2 aligns with the functional separation between the NAS layer and the AS layer.

This describes partial network slice support in a registration area.

Network slices may be supported in one or more TAs of a PLMN/SNPN. Partial network slice support in a UE's registration area includes configuring the UE using a partially allowed NSSAI and/or a partially denied S-NSSAI in the RA.

Registration may be performed via 3GPP access, and a registration area may be created for UEs supporting partial network slice support within the registration area. When the AMF creates such a registration area, it considers the trade-off between signaling for paging on a TA that does not support S-NSSAI and signaling for mobility registration updates on a TA that does support S-NSSAI. Accordingly, the AMF may create a registration area that includes a TA where the requested S-NSSAI is not supported. For such an S-NSSAI, the following may apply:
i) If the UE requests registration at a TA where S-NSSAI is not supported,
   - The S-NSSAI may be included in a partially allowed NSSAI. Alternatively, the AMF may partially reject the S-NSSAI in the RA; or
   - If the S-NSSAI is subject to Network Slice Admission Control (NSAC) for the maximum number of UEs, the AMF may send information to the UE in the RA that this S-NSSAI has been partially rejected.
ii) When a UE requests registration in a TA where an S-NSSAI is supported,
   - the S-NSSAI may be included in a partially allowed NSSAI; or
   - when the S-NSSAI is subject to NSAC for a maximum number of UEs, the AMF may restrict an RA such that the S-NSSAI is supported in all TAs of the RA. the AMF may include the S- NSSAI in an allowed NSSAI.

Whether the AMF uses a partially allowed NSSAI or a partially rejected S-NSSAI in the RA to support the UE is determined per S-NSSAI according to an AMF local policy. When it is supported and allowed by the local policy, the partially allowed NSSAI and the partially rejected S-NSSAI in the RA for different S-NSSAIs may simultaneously be applied to one UE.

While an S-NSSAI of an allowed NSSAI is supported in all TAs of a registration area, an S-NSSAI of a partially allowed NSSAI is supported only in TAs corresponding to a TA list (a subset of a TAI list included in the registration area related to the S-NSSAI) corresponding to the TA.

When the UE supports partial network slice support (Partial Network Slice support) in the registration area, the AMF creates the registration area for the UE based on S- NSSAI support of a requested NSSAI in a current TA and a neighboring TA. The AMF may provide the partially allowed NSSAI or the partially rejected S-NSSAI in the RA by a registration accept message or a UE configuration update command message to the UE:
- one or more of requested S-NSSAIs may be supported in a TA subset of a (potential) registration area. In this case, the AMF may include the corresponding S-NSSAI in the partially allowed NSSAI, and the AMF may include corresponding mapping information between the S-NSSAI of the partially allowed NSSAI and an HPLMN S-NSSAI in the registration accept message or the UE configuration update command message. The AMF provides a list of TAs where the corresponding S-NSSAI is supported for each S-NSSAI of the partially allowed NSSAI. The UE is considered to be registered to the S-NSSAI in the whole registration area. Also, the AMF provides the partially allowed S-NSSAI (an indication of the TA list where the partially allowed S-NSSAI is supported is not included) together with a context of the UE to an NG-RAN.
- Or the AMF may reject the S-NSSAI along with a reject cause (reject cause) as "partially rejected in the RA". The AMF provides a list of TAs for each S- NSSAI of S-NSSAIs partially rejected in the RA where the S-NSSAI is supported or not supported to the UE.

When the UE stores the partially allowed NSSAI, the following applies:
- A UE is considered to be registered to an S-NSSAI of a partially allowed NSSAI in the whole registration area. the UE does not trigger registration when the UE moves between a support TA and a non-support TA for the S-NSSAI within the RA.
- the UE may initiate a PDU session establishment procedure for the S-NSSAI only when the UE is in a TA where the S-NSSAI is supported.
- When the UE has already established a PDU session based on an S-NSSAI part of the partially allowed NSSAI, only when the UE is in a TA part of the TA list associated with each S-NSSAI, the UE may activate user plane resources of the PDU session.
- User plane resources for the PDU session are activated for the S-NSSAI of the partially allowed NSSAI, and the UE may move to a TA not included in the TA list associated with the S- NSSAI. In this case, user plane resources for the PDU session are deactivated, but the UE and SMF's PDU session context is not released. As long as the UE is located in a TA not included in the TA list associated with the S-NSSAI of the partially allowed NSSAI (Partially Allowed NSSAI), user plane resources for the PDU session are not activated.

When the UE stores the S-NSSAI partially rejected in the RA together with the related TA list, the UE may initiate a mobility registration update procedure to request S-NSSAI registration only when the UE is in a TA supporting this S-NSSAI.

Support for a network slice where a network slice service area does not match a deployed TA (Support for Network Slices with Network Slice Area of Service not matching deployed Tracking Areas) is explained.

Network support for a network slice is defined in units of TAs. It may be useful to deploy some network slices such that the network slice has limited geographic availability that does not match an existing Tracking Area boundary.

In this case, an operator may decide to change a topology of a Tracking Area to match a boundary of a network slice. Alternatively, the operator may set resources for a network slice in cells of a TA where the network slice is available, and a cell may be set to 0 resources in an area of a TA defined such that the network slice is not available.

When granularity is smaller than a TA, that is, when an NS-AoS includes a TA in which a network slice cannot be used in some cells of the TA, an AMF receives information on network slice availability from OAM.

To optimize end-to-end behavior, the AMF may configure S-NSSAI location availability information for a supporting UE based on NS-AoS information received from the OAM. Also, a network may need to monitor S-NSSAI use and enforce the NS-AoS when the UE does not support the S-NSSAI location availability information (e.g., S-NSSAI location availability information).

Examples of S-NSSAI location availability information are explained.

The S-NSSAI location availability information defines additional restrictions on S-NSSAI use in a TA where network slice availability does not match a TA boundary. Whether the AMF transmits the S-NSSAI location availability information to the supporting UE is set for each S-NSSAI.

The S-NSSAI location availability information transmitted to the UE includes location information indicating a cell of a TA within an RA in which a related S-NSSAI may be used if the S-NSSAI is not usable in all cells of the TA, for each corresponding S-NSSAI of a configured NSSAI.

The UE may indicate that the UE supports the S-NSSAI location availability information in a 5GMM core network function. In this case, when the AMF allocates an RA in which network slice availability does not match an entire TA, the AMF may configure the UE with S-NSSAI location availability information for one or more S-NSSAIs according to OAM configuration. For example, the AMF may configure the UE based on including the S-NSSAI location availability information in a registration accept message or a UE configuration command message. The UE receiving the S-NSSAI location availability information applies the corresponding information as follows:
1. The S-NSSAI may be rejected in the RA, partially rejected in the RA, or rejected along with a cause code with which S-NSSAI registration may be retried. In this case, the UE may request the S-NSSAI only when it is indicated that the S-NSSAI may be used in a cell where the UE is camping in the S-NSSAI location availability information.
2. When the S-NSSAI is in a partially allowed NSSAI, the UE does not activate a user plane for the corresponding S-NSSAI and a pre-established PDU session if the UE is in a cell within the RA but outside location information of the S-NSSAI.
3. When the S-NSSAI is in the partially allowed NSSAI, the UE in a CM-IDLE mode moves to a cell outside the location information of the S-NSSAI, and the UE has established a PDU session based on the corresponding S-NSSAI, the PDU session is maintained.

Network-based monitoring and enforcement for a network slice service area that does not match a deployed Tracking Area is explained.

OAM may configure an RRM policy for each cell for an S-NSSAI. That is, RRM resources for the S-NSSAI are not allocated while a cell outside a network slice service area is in a TA supporting the S-NSSAI.

The network may apply the NS-AoS to the S-NSSAI as follows:
1. The network monitors validity of the S-NSSAI for a UE in a CM-CONNECTED state according to a location.
2. A non-supporting UE performs a PDU session establishment request based on an invalid S-NSSAI according to S-NSSAI location availability information. In this case, the AMF may reject a NAS transport message using a back-off timer using S-NSSAI based congestion control.
3. If the AMF determines that the UE in the CM-CONNECTED state moves outside the NS-AoS, the AMF performs the following logic:
   a) The non-supporting UE may have another S-NSSAI in an Allowed NSSAI. In this case, the AMF may remove the S-NSSAI from the Allowed NSSAI by updating the UE via a UE configuration update (thereby causing the UE to locally release a PDU session), and may remove the S-NSSAI from a configured NSSAI. Then, the AMF requests an SMF to locally release all PDU sessions having the corresponding S-NSSAI from the network.
   b) The non-supporting UE may not have another S-NSSAI in the Allowed NSSAI. In this case, the AMF updates the UE via a UE configuration update to remove the S-NSSAI from the Allowed NSSAI (thereby causing the UE to locally release a PDU session), removes the S-NSSAI from the configured NSSAI, and may add a default S-NSSAI to the Allowed NSSAI. Then, the AMF requests the SMF to locally release all PDU sessions having the removed S-NSSAI from the network.
   c) For non-supporting UEs that have no other S-NSSAI in the allowed NSSAI or configured NSSAI, the AMF instructs the SMF to release the PDU session.
4. If the AMF determines the S-NSSAI is valid (e.g., when the UE moves to an NS-AoS), the AMF updates the UE to UCU (e.g., including the S-NSSAI in the configured NSSAI).

It describes the provision of Network Slice Access stratum Group (NSAG) information to lower layers.

The NSAG information provided by the network and stored in the UE includes an NSAG list. Each NSAG list includes:
a) the NSAG list includes an NSAG ID;
b) the NSAG list includes an S-NSSAI list which is associated with the NSAG and should be a part of the configured NSSAI;
c) the NSAG list includes a priority value related to the NSAG; and
d) optionally, the NSAG list includes a TAI list where the NSAG is valid. When this list is not provided from the network, the NSAG is valid in a PLMN or an SNPN that transmitted the NSAG information and an equivalent PLMN.

A UE Non Access Stratum (NAS) layer provides the following to a lower layer (e.g., an Access Stratum (AS) layer):
a) the UE NAS layer provides most recent NSAG information stored in the UE;
b) the UE NAS layer provides an allowed NSSAI or a requested NSSAI for the purpose of network slice-based cell reselection; and
c) the UE NAS layer provides zero or more S-NSSAIs related to an access attempt for the purpose of network slice-based random access. When the UE attempts access in a 5GMM-IDLE mode with an RRC inactive indication or a 5GMM-CONNECTED mode, the S-NSSAI is determined as follows:
   i) the S-NSSAI is an S-NSSAI(s) triggering an initial NAS message. That is, it may be as in the following examples:
      - in a case of a registration request message, the S-NSSAI is a requested NSSAI (if this NSSAI exists); or
      - in a case in which the access attempt occurs due to the initial NAS message, in a case of a service request message or a control plane service request message, the S-NSSAI is an NSSAI associated with all PDU sessions included in an uplink data status IE (if any), a PDU session status IE (if any), or an allowed PDU session status IE (if any);
   ii) the S-NSSAI is an S-NSSAI associated with a PDU session when the access attempt occurs due to the following reasons:
      - the access attempt occurs for an uplink user data packet transmitted for a PDU session having a suspended user plane resource;
      - the access attempt occurs for a UL NAS transport message delivering a 5GSM message for a PDU session associated with the S-NSSAI (if any);
      - the access attempt occurs for CIoT user data transmitted via the control plane service request message or the UL NAS transport message;
   iii) in a case in which the access attempt occurs due to the following reasons, there is no S-NSSAI:
      - a deregistration procedure;
      - the access attempt occurs for a UE-initiated NAS transport procedure for transmitting an SMS, an LPP message, an SOR transparent container, a UE policy container, a UE parameter update transparent container, or a location service message; or
      - the access attempt occurs for an emergency service; or
   iv) in a case in which the access attempt occurs due to a reason other than the reasons specified in i) to iii) described above, the S-NSSAI is an allowed NSSAI (if any).

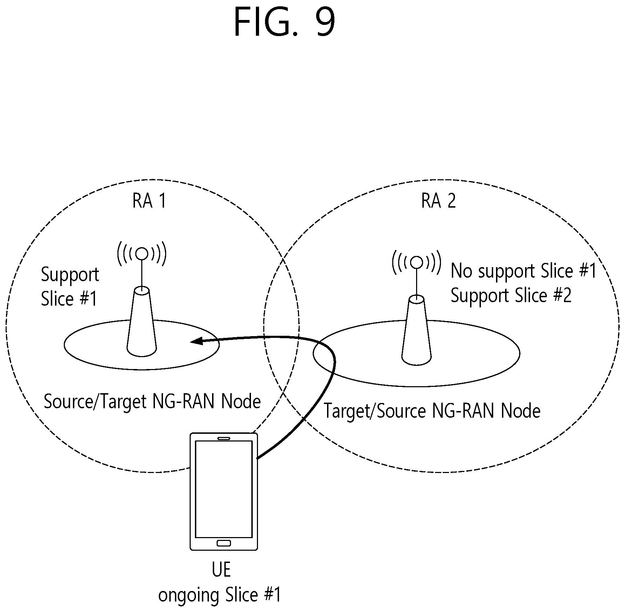

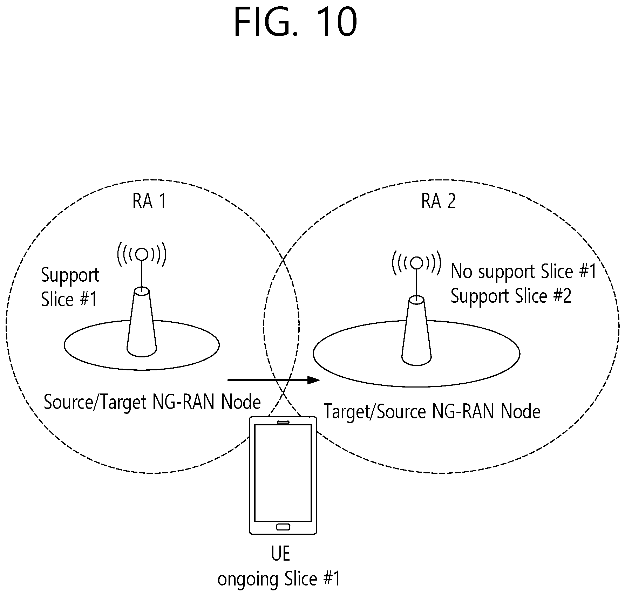

Hereinafter, with reference to FIG. 9 and FIG. 10, an example of a registration procedure for mobility and periodic registration update is explained.

The following drawings have been prepared to illustrate specific examples of the present specification. The names of specific devices or specific signals/messages/fields shown in the drawings are provided merely as examples; therefore, the technical features of the present specification are not limited to the specific names used in the following drawings.

**FIG. 9** **illustrates an example of reverting to the existing NG-RAN due to slice not being supported.**

An example of FIG. 9 illustrates an example of moving to a previous RA due to a slice not being supported in case of mobility between RAs. For example, an example of moving back due to the slice not being supported is explained.

As shown in FIG. 9, at a time of handover, a source node may provide one or more S-NSSAIs not supported by a target node to a UE. The UE moves to an area supporting one or more of these slices of the UE.

The following drawings have been prepared to illustrate specific examples of the present specification. The names of specific devices or specific signals/messages/fields shown in the drawings are provided merely as examples; therefore, the technical features of the present specification are not limited to the specific names used in the following drawings.

**FIG. 10** **illustrates an example of service interruption due to slice not being supported.**

An example of FIG. 10 represents an example of a scenario in which a slice is not supported in case of mobility between RAs. For example, a service interruption may occur because the slice is not supported.

As can be seen in FIG. 10, a UE is moving to an area that does not support at least one of ongoing slices of the UE. A target node may fail to accept at least one of ongoing S-NSSAIs of the UE. In such a situation, a service for the failed ongoing slice is suspended for the UE.

This scenario may be valid only when there is a specific Service Level Agreement (SLA) in which an original slice should be available in a specific geographic area (TA/RA) and a service used in the original slice should also have continuity when the UE moves out of the geographic area. Also, the present disclosure assumes that a new PDU session of the same slice is not started in a new geographic area. That is, the SLA is applied only to connected mode mobility.

A network slice configuration minimum area is being discussed to be supported in units of a cell or tracking area. A method for processing a Tracking Area (TA) where a network slice is deployed and an Area of Service of a network slice of a UE is also being discussed.

A network may transmit network slice availability including Location information (a set of cells, combination of cells and TAs) to a UE in order to support the Area of service. An Area in which a specific network slice can be used may be defined based on the network slice availability received by the UE. That is, the network may define an NS-AoS (Network slice Area of Service). The network can inform the NS-AoS to the UE by transmitting S-NSSAI location validity information such as an S-NSSAI, a list of cell IDs, and an NS-AoS of the S-NSSAI to the UE.

In addition, a method for handling a specific S-NSSAI is also being discussed even when the specific S-NSSAI does not support a part of TAs among TAs in an RA (Registration Area). According to prior arts, when an RA including a plurality of TAs exists, it is determined that all S-NSSAIs in an Allowed NSSAI are registered in the RA only when all TAs within the RA support the S-NSSAI.

A method for performing registration for a rejected S-NSSAI for an RA is being discussed when some TAs support a specific S-NSSAI for more efficient UE paging and mobility management. For example, in such a case, the RA may be managed based on a Partially allowed NSSAI available only in a specific TA or a Partially rejected NSSAI rejected only in a specific TA. That is, a Partially allowed NSSAI and a Partially rejected NSSAI may be defined. For an S-NSSAI available only in some TAs among TAs in one RA, the RA may be managed based on a Partially allowed NSSAI and a Partially rejected NSSAI.

A UE Access Stratum (AS) layer supports a slice aware cell reselection operation. That is, a UE (e.g., a UE AS layer) may perform cell selection based on a network slice. For example, the UE (e.g., the UE AS layer) may find a cell based on a slice group priority received based on subscriber information or a network situation. If the UE (e.g., the UE AS layer) does not find a suitable cell, the UE (e.g., the UE AS layer) may perform signal quality-based cell selection according to prior arts.

According to these prior arts, there is no guarantee that a cell supporting a network slice requested by the UE is selected for a service required at a specific time. In particular, when a slice is configured in units of cells rather than a registration area or tracking area, there is a problem that a probability that the UE is located in a cell supporting a desired slice becomes smaller.

According to prior arts, even if a UE is in an area that does not support a desired slice, there is a problem that the UE cannot perform any operation for solving this. Discussion for the UE to minimize latency and provide services by processing this is necessary.

According to prior arts, a UE (e.g., a UE AS layer) may select a cell that does not support a network slice desired by the UE. Due to this, a problem may occur in which a service cannot be performed because the UE does not belong to the NS-AoS. Furthermore, there is a problem that a NAS layer of the UE cannot know whether the UE belongs to the NS-AoS.

According to prior arts, a terminal can select a cell by performing slice aware cell reselection. In this case, there is a problem that there is no guarantee that the terminal selects a cell supporting a network slice required by the terminal.

For example, a terminal may be located in an area that does not support a network slice required (or desired) by the terminal. In this case, according to prior arts, an operation for the terminal to move to a service area supporting a network slice required by the terminal has not been supported. According to prior arts, the terminal must wait for a move command from a network. Due to this, there is a problem that service continuity of the terminal is not guaranteed. In particular, a network slice configuration may be configured in units of cells rather than units of a registration area or tracking area. In such a case, a probability that the terminal selects an area supporting a network slice required for the terminal becomes smaller.

Therefore, a plan for solving the problem according to prior arts is necessary.

For example, an operation for minimizing delay time for providing a service to a terminal is necessary. As an example, the terminal may allow the network to quickly move the terminal to an area supporting a network slice required for the terminal by performing an operation according to an example of the disclosure of the present disclosure.

In various examples of the disclosure of the present disclosure, a plan for the NAS layer to handle an operation related to the NS-AoS is explained. In prior arts, what operation the NAS layer performs has not been discussed. In various examples of the disclosure of the present disclosure, a method for the NAS layer to determine and handle the NS-AoS will be explained.

In various examples of the disclosure of the present disclosure, it can be determined whether a UE is located within the NS-AoS or not. Also, when the UE is not located within the NS-AoS, the UE can transmit an indication to the network.

Various examples of the disclosure of the present disclosure will be explained in detail.

After a UE selects a specific area, it can be determined whether the UE belongs to a service area supporting a desired network slice. The UE may report whether the UE belongs to the service area or not to a network. For example, if the UE is not in the service area, the UE may transmit information that the UE does not belong to the service area to the network. Based on this, processing for an area that the network does not recognize can be performed. For example, the network is in a state of not recognizing that the UE is not located in the service area, but the network can perform processing related to the service area by the UE informing the network of such a fact. The network may perform handling such as performing a handover operation and a deregistration operation faster for a UE that is not located in the service area.

When information related a network slice changes, the UE NAS layer may receive area-specific slice configuration information from the network (NW) through the registration procedure and configuration update procedure. Area specific slice configuration information may include the service area for the S-NSSAI and information such as the TAI.

Additionally, a serving cell change may occur when the UE moves or when the UE performs cell selection/reselection. When a serving cell change occurs, the UE AS layer may inform the UE NAS layer of the Selected Area information. The Selected Area information includes TA information such as the cell ID, TAC, and TAI.

The UE NAS layer may verify whether the service area for a specific network slice matches the UE's area sent from the UE AS layer, based on the Area specific slice configuration information received from the NW and the Selected area information received from the UE AS layer. Based on this, the UE NAS layer may determine whether the UE is within the service area supporting the network slice.

For example, the Selected Area information may include tracking area information received by the UE's AS layer from the serving cell for initial registration. The UE's AS layer may transmit Selected Area information, including the UE's tracking area information, to the NAS layer.

For example, Selected area information may be area information selected by a terminal. For example, the Selected area information may include a cell identity, a tracking area code, and a plmn identity included in an SIB received from a serving cell after the terminal is camped on a suitable cell. An AS layer of a UE may transmit the Selected area information including the cell identity, tracking area code, and plmn identity to a NAS layer.

Area specific slice configuration information received from an NW may be S-NSSAI location validity information received from the NW by a UE while a registration procedure is performed.

For example, the S-NSSAI location validity information includes an S-NSSAI and an NS-AoS capable of handling the corresponding S-NSSAI. Here, the NS-AoS may include information on a tracking area code included in tracking area lists included in a registration area and a cell identity to which the corresponding tracking area code is applied. For example, the S-NSSAI location validity information may include a set of a tracking area code and a cell identity.

When a NAS layer of a UE determines a service area of an S-NSSAI supported by the NAS layer of the UE, the NAS layer of the UE may determine whether the UE is located within an area supported by a network slice based on Area specific slice configuration information and Selected area information. For example, the NAS layer of the UE may determine that a terminal belongs to an area currently supported by a network slice if a tracking area code and a cell identity of area specific configuration information received from the NW match selected area information received from an AS layer of the UE.

When a UE is currently located in an Area supporting a network slice, the UE performs a NAS procedure (e.g., a PDU session establishment procedure, etc.) by connecting with an NW. However, when the UE belongs to an Area that does not support a network slice, the UE transmits an indication to the Network informing that the UE is in an Area not currently supported. At this time, the UE may transmit a NAS message including this indication to the network. For example, the NAS message may be a Registration request, a UL NAS transport, and/or a PDU session establishment request.

Also, the UE may know a cell supporting a network slice based on network slice information transmitted from a network. Therefore, the UE may also update a cell list supporting a network slice and a cell list not supporting a network slice in a currently deployed area based on a location of the UE.

The following drawings have been prepared to illustrate specific examples of the present specification. The names of specific devices or specific signals/messages/fields shown in the drawings are provided merely as examples; therefore, the technical features of the present specification are not limited to the specific names used in the following drawings.

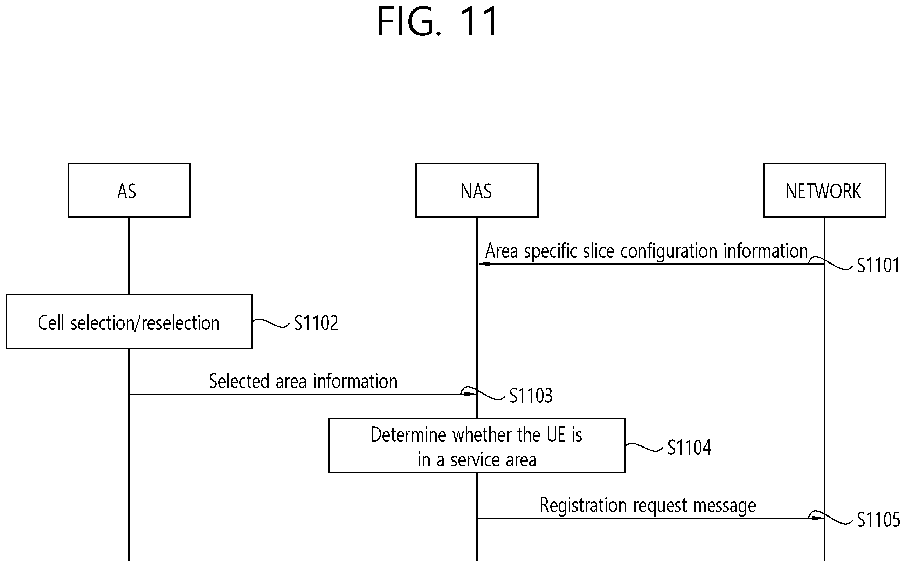

**FIG. 11** **illustrates an example of a procedure according to an embodiment of the present disclosure.**

FIG. 11's example shown UE AS and UE NAS may be included in a UE. The UE AS is an AS layer of the UE, and the UE NAS is a NAS layer of the UE. In the example of FIG. 11, the AS layer and the NAS layer are separated, but this is merely an example. For example, the AS layer and the NAS layer may be physically separated, and the AS layer and the NAS layer may not be physically separated. For example, operations of the AS layer and operations of the NAS layer may all be operations of the UE.

In the example of FIG. 11, an area may include one or more cells, one or more TAs, and/or a geographical area (e.g., GPS coordinates).

In the example of FIG. 11, a network may include a base station, an AMF, an SMF, and the like. For example, the network may be the AMF.

In step S1101, the network may transmit area specific slice configuration information to the UE (e.g., the NAS layer of the UE). The area specific slice configuration information may be Area specific slice configuration information. The area specific slice configuration information may include a list of cell identifiers. For example, the cell identifiers may include an area of service and TA information of an S-NSSAI.

In step S1102, the UE (e.g., the AS layer of the UE) may perform a cell selection/reselection procedure.

In step S1103, the AS layer of the UE may transmit selected area information to the NAS layer of the UE. The selected area information may include a cell ID, a UE location, a TAC, and a PLMN ID.

In step S1104, the NAS layer of the UE may determine whether the UE is located within a service area. For example, the NAS layer of the UE may determine whether the UE is located within the service area based on the selected area information and the area specific slice configuration information.

For example, the UE may know a current location of the UE within a cell or a TA based on the selected area information. The UE may know a cell list or a TA received from the network based on the area specific slice configuration information. The UE may determine whether the current location of the UE within the cell or the TA and the cell list or the TA received from the network match. Or, the UE may determine whether the current location of the UE within the cell or the TA is included in the cell list or the TA received from the network.

If the current location of the UE within the cell or the TA is included in or matches the cell list or the TA received from the network, the UE may establish a connection with the network based on a corresponding TA or cell.

When a current location of a UE within a cell or a TA is not included in or does not match a cell list or a TA received from a network, the UE may transmit information indicating that the UE is not located within a service area to the network. For example, the UE may transmit an "Out of NS-AoS indication" to the network. As an example, the UE may include information indicating that the UE is not located within the service area in a registration request message transmitted in step S1105.

In step S1105, a UE NAS layer may transmit a registration request message to the network. When it is determined that the UE is not located within the service area in step S1104, the UE may transmit a registration request message including information that the UE is not located within the service area (e.g., an out of service area indication) to the network.

For example, when it is determined in step S1104 that the UE is located within the service area, the UE may transmit a registration request message including information that the UE is not located within the service area (e.g., an in-service area indication) to the network. As another example, when it is determined that the UE is located within the service area, the UE may perform a PDU session establishment procedure to make a service request. In this case, the UE may transmit a PDU session establishment request message. As another example, when a configuration update is required, the UE may also transmit a PDU session modification request message.

The UE may support S-NSSAI location validity information. A UE NAS layer may determine whether the UE is located within a service area based on information received from a lower layer (e.g., including a cell id list, a UE location, a TAC, etc.) (e.g., area information selected by a UE) and information received from an NW (e.g., including an id of a service area for a specific network slice) (e.g., area specific slice configuration information). For example, the UE may determine whether a current location of the UE is located within a service area supporting a network slice received from the NW, based on location validity information. The UE may determine that the UE is in NS-AoS when the UE is located in the service area, and otherwise, the UE may determine that the UE is out of NS-AoS.

After the UE determines whether the UE is located within the service area, the following operation may be performed according to whether the UE is in NS-AoS or out of NS-AoS.

For example, when the UE is configured to be in NS-AoS, service execution for the UE is possible. Accordingly, the UE may perform a NAS procedure such as PDU session establishment by connecting with the NW.

When the UE is configured to be out of NS-AoS, the UE is located in a location where a service for the UE is impossible. Therefore, the UE may inform a current situation of the UE by transmitting an out of NS-AoS indication, which is an indication that the UE is outside the service area, to the network.

Hereinafter, specific examples to which various examples of the present disclosure are applied will be described.

Mobility management for handling a network slice based on NS-AoS that does not match a deployed cell and a TA will be described.

An operator may also choose that an NS-AoS of an S-NSSAI does not match boundaries of existing cells and TAs. To support this deployment option, the operator may check whether an AMF covering the NS-AoS operates as described below.

When the UE supports S-NSSAI location validity information, the UE may indicate that the UE supports the S-NSSAI location validity information during a registration procedure. The AMF may provide the S-NSSAI location validity information to the UE indicating that the UE supports the S-NSSAI location validity information. For each corresponding S-NSSAI in a configured NSSAI, the S-NSSAI location validity information may include:
a) an S-NSSAI; and
b) a cell ID list belonging to a registration area. The cell ID list indicates the NS-AoS of the S-NSSAI.

The UE may determine whether the UE is inside or outside the NS-AoS based on the S-NSSAI location validity information received from the network and UE location information received from a lower layer of the UE.
a) The UE may consider that the UE is located inside the NS-AoS when the following two conditions are satisfied:
   1) TA code information received by the UE from a lower layer is included in a TAC (Tracking Area Code) of one of current Tracking Area Identifiers (TAI), and
   2) a cell ID of a current serving cell received by the UE from the lower layer is included in a cell ID list of an S-NSSAI location validity information IE.
b) The UE may consider that the UE is located outside the NS-AoS when the following two conditions are satisfied:
   1) TA code information received by the UE from the lower layer is not included in a TAC of one of current TAIs, and
   2) the cell ID of the current serving cell received by the UE from the lower layer is not included in the cell ID list of the S-NSSAI location validity information IE.

The UE supports the S-NSSAI location validity information, and the UE may be considered to be located outside the NS-AoS as described above. In this case, the UE may include an Out of AoS indication IE in the registration request message.

For example, when the UE considers itself to be located outside the NS-AoS, the UE may transmit an Out of NS-AoS indication IE to the network. And, the UE may stop a NAS transport procedure initiated by the UE.

When the UE considers itself to be located inside the NS-AoS, the UE may also initiate the NAS transport procedure initiated by the UE.

An Out of NS-AoS Indication Information Element (IE) may be included in the registration request message.

For example, an Out of NS-AoS indication may be defined as in the following example of Table 3.

The purpose of the Out of NS-AoS indication IE is to deliver the Out of NS-AoS indication. The Out of NS-AoS indication IE may be coded as shown in Table 3. The Out of NS-AoS indication may be a type 4 information IE with a length of 3 octets.

**[Table 3]**

| 8 | 7 | 6 | 5 | 4 | 3 | 2 | 1 | |
|---|---|---|---|---|---|---|---|---|
| Out of NS-AoS Indication IEI | | | | | | | | octet 1 |
| Out of NS-AoS Indication contents | | | | | | | | octet 2 |
| Out of NS-AoS Indication | | | | | | | | octet 3 |
| | | | | | | | | octet n |

Table 3 shows an example of an Out of NS-AoS indication.

The content of an Out of NS-AoS indication includes the Out of NS-AoS indication itself and the NSSAI or NSAG ID that cannot be serviced.

The following drawings have been prepared to illustrate specific examples of the present specification. The names of specific devices or specific signals/messages/fields shown in the drawings are provided merely as examples; therefore, the technical features of the present specification are not limited to the specific names used in the following drawings.

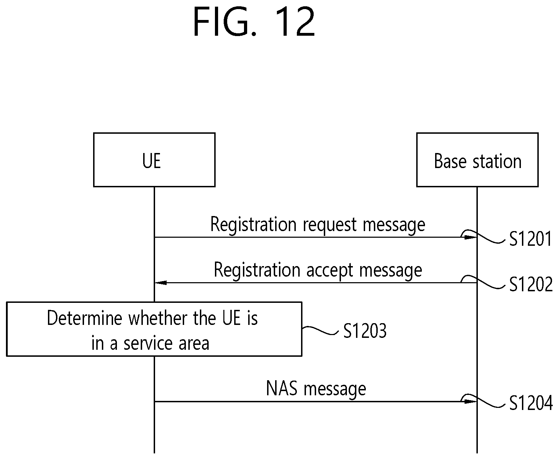

**FIG. 12** **illustrates an** example **of operations according to an embodiment of the present disclosure.**

For reference, the procedure shown in FIG. 12 is merely an example, and the scope of the present disclosure is not limited by the example of FIG. 12.

For example, regarding the example of FIG. 12, the operations described in the examples of FIGS. 1 to 11 may also be applied. For example, even for operations, content, etc., not directly described in the example of FIG. 12, the operations, content, etc., described in various examples of the present disclosure may be applied.

In the example of FIG. 12, a network may include, for example, a base station, an AMF, an SMF, and the like. Hereinafter, the AMF may be described as an example of the network. However, this is merely an example, and the scope of the present disclosure is not limited in that the operation of the network in FIG. 12 is only the operation of the AMF.

In step S1201, the UE may transmit a registration request message to the network (e.g., the AMF).

In step S1202, the network (e.g., the AMF) may transmit a registration accept message to the UE. The registration accept message may include location validity information related to a network slice.

In step S 1203, the UE may determine whether the UE is located within a service area related to the network slice.

For example, the UE may determine whether the UE is located within the service area of the network slice based on the location validity information and location information of the UE.

Here, the location information of the UE may be transferred from an AS layer of the UE to a NAS layer of the UE.

For reference, before step S1201 or before step S1203, the UE may perform a cell selection procedure or a cell reselection procedure. The location information of the UE may include selected area information based on the cell selection procedure or the cell reselection procedure. The selected area information may include at least one of a cell ID, a UE location, a Tracking Area Code (TAC), and/or a Public Land Mobile Network (PLMN) ID.

Location validity information related to a network slice may be, for example, S-NSSAI location validity information. The location validity information may include an S-NSSAI; and a cell ID of one or more cells included in a service area related to the S-NSSAI.

In step S1204, the UE may transmit a NAS message to the network (e.g., the AMF). For example, the UE may transmit the NAS message based on a determination according to step (S1203).

For example, when it is determined that the UE is located outside the service area, the NAS message may include information informing that the UE is outside the service area. This information may include an Out of Network Slice-Area of Service (NS-AoS) indication and an NSSAI or an NSAG ID that cannot be serviced. In this case, the NAS message may be a registration request message, a UL NAS transport message, or a PDU session request message.

For example, when it is determined that the UE is located within the service area, the NAS message may be a Protocol Data Unit (PDU) session establishment request message.

According to one embodiment of the present disclosure, the UE may determine whether the UE exists within a service area based on information received from a network node and information received from a lower layer of the UE.

According to one embodiment of the present disclosure, the UE may determine whether a selected area is an area supporting a slice desired by the UE based on a detect procedure (e.g., a procedure for searching for a cell, etc.). If the selected area does not support the slice desired by the UE, the UE may inform the network.

According to one embodiment of the present disclosure, the UE may manage storage for an S-NSSAI and an area list based on network slice configuration information received from the network and area information related to area information selected by the UE.

According to one embodiment of the present disclosure, the UE NAS layer receives information on an area selected by the UE from the UE AS layer. The UE NAS layer may receive service area information for a specific network slice from the network. The UE NAS layer may determine whether the UE is in a service area providing a network slice required for the UE based on the information on the area selected by the UE and the service area information for the specific network slice. If the terminal is not in a desired service area, the terminal may transmit an indication to the network that the terminal is not in the service area. The network may quickly determine whether it is necessary for the terminal to move.

The present disclosure may have various effects.

For example, a service area of a network slice may be effectively supported. For example, the terminal may be in an area that does not support a required service. In this case, the terminal may quickly determine that the terminal exists in the area that does not support the service required for the terminal. By the terminal informing the network of such information, the network may quickly determine whether movement of the corresponding terminal is necessary. When movement is necessary, the network quickly processes a procedure to be related to the movement of the terminal, thereby reducing a delay time for service provision to the terminal.

Advantageous effects which can be obtained through specific embodiments of the present disclosure are not limited to the advantageous effects listed above. For example, there may be a variety of technical effects that a person having ordinary skill in the related art can understand and/or derive from the present disclosure. Accordingly, the specific effects of the present disclosure are not limited to those explicitly described herein, but may include various effects that may be understood or derived from the technical features of the present disclosure.

For reference, operations of terminals (e.g., UE) described in the present disclosure may be implemented by the devices of FIGS. 1 to 3 described above. For example, the terminal may be the first device 100 or second device 200 of FIG. 2. For example, operations of the terminal described in the present disclosure may be processed by one or more processors 102 or 202. Operations of the terminal described in the present disclosure may be stored in one or more memories 104 or 204 in the form of instructions/programs (e.g., instruction, executable code) executable by one or more processors 102 or 202. One or more processors 102 or 202 may control one or more memories 104 or 204 and one or more transceivers 105 or 206, and execute instructions/programs stored in one or more memories 104 or 204 to perform operations of the terminal (e.g., UE) described in the present disclosure.

Additionally, instructions for performing operations of the terminal described in the present disclosure may be stored in a non-volatile computer-readable storage medium that records them. The storage medium may be included in one or more memories 104 or 204. Instructions recorded in the storage medium may be executed by one or more processors 102 or 202 to perform operations of the terminal described in the present disclosure.

For reference, operations of network nodes (e.g., AMF, SMF, UPF, UDM, H-PCF, NEF, AF, UDR, etc.) or base stations (e.g., NG-RAN, gNB, RAN, (R)AN, etc.) described in the present disclosure may be implemented by devices of FIGS. 1 to 3 to be described below. For example, the network node or base station may be the first device 100 or second device 200 of FIG. 2. For example, operations of the network node or base station described in the present disclosure may be processed by one or more processors 102 or 202. Operations of the terminal described in the present disclosure may be stored in one or more memories 104 or 204 in the form of instructions/programs (e.g., instruction, executable code) executable by one or more processors 102 or 202. One or more processors 102 or 202 may control one or more memories 104 or 204 and one or more transceivers 106 or 206, and execute instructions/programs stored in one or more memories 104 or 204 to perform operations of the network node or base station described in the present disclosure.

Additionally, instructions for performing operations of the network node or base station described in the present disclosure may be stored in a non-volatile (or non-transitory) computer-readable storage medium that records them. The storage medium may be included in one or more memories 104 or 204. Instructions recorded in the storage medium may be executed by one or more processors 102 or 202 to perform operations of the network node or base station described in the present disclosure.

While preferred embodiments have been described exemplarily above, the present disclosure is not limited to such specific embodiments, and may be modified, changed, or improved in various forms within the scope described in the spirit and claims of the present disclosure.

In the exemplary systems described above, methods are described based on flowcharts as a series of steps or blocks, but are not limited to the order of the described steps, and some steps may occur in different orders or simultaneously with other steps than described above. Additionally, those skilled in the art will understand that the steps shown in the flowcharts are not exclusive, and other steps may be included or one or more steps of the flowcharts may be deleted without affecting the scope of rights.

Claims in the present disclosure can be combined in a various way. For instance, technical features in method claims of the present disclosure can be combined to be implemented or performed in an apparatus, and technical features in apparatus claims can be combined to be implemented or performed in a method. Further, technical features in method claim(s) and apparatus claim(s) can be combined to be implemented or performed in an apparatus. Further, technical features in method claim(s) and apparatus claim(s) can be combined to be implemented or performed in a method. Other implementations are within the scope of the following claims.

## Claims

1. A method for performing communication, the method performed by a User Equipment (UE) and comprising:
transmitting a registration request message to an Access and Mobility management Function (AMF);
receiving a registration accept message from the AMF,
wherein the registration accept message includes location validity information related to a network slice; and
determining whether the UE is located within the area of service of the network slice, based on the location validity information and location information of the UE; and
transmitting a Non Access Stratum (NAS) message to the AMF, based on the determination.

2. The method of claim 1,
wherein the location information of the UE is transmitted from an Access Stratum (AS) layer of the UE to the NAS layer of the UE.

3. The method of claim 1 or 2, further comprising:
performing a cell selection procedure or a cell reselection procedure,
wherein the location information of the UE includes selected area information based on the cell selection procedure or the cell reselection procedure.

4. The method of any one of claims 1 to 3,
wherein the selected area information includes at least one of a cell ID, a UE location, a Tracking Area Code (TAC), and/or a Public Land Mobile Network (PLMN) ID.

5. The method of any one of claims 1 to 4,
wherein the location validity information related to the network slice includes:
an S-NSSAI related to the network slice; and
a cell ID of one or more cells included in a service area related to the S-NSSAI.

6. The method of any one of claims 1 to 5,
wherein the NAS message includes information related to that the UE is outside the service area, based on that the UE is determined to be located outside the service area.

7. The method of claim 6,
wherein the information related to that the UE is outside the service area includes, an Out of Network Slice-Area of Service (NS-AoS) indication and an NSSAI related to an unavailable service or a Network Slice Access stratum Group (NSAG) ID related to an unavailable service.

8. The method of any one of claims 1 to 5,
wherein the NAS message is a Protocol Data Unit (PDU) session establishment request message, based on that the UE is determined to be located outside the service area.

9. The method of any one of claims 1 to 8,
wherein the registration request message includes capability information related to that the UE supports the location validity information related to the network slice.

10. A User Equipment (UE) for performing communication, the UE comprising:
at least one transceiver;
at least one processor; and
at least one computer memory operably connectable to the at least one processor and storing instructions that, based on being executed by the at least one processor, perform operations comprising: the method of any one of claims 1 to 9.

11. An apparatus in mobile communication, the apparatus comprising:
at least one transceiver;
at least one processor; and
at least one computer memory operably connectable to the at least one processor and storing instructions that, based on being executed by the at least one processor, perform operations comprising: the method of any one of claims 1 to 9.

12. A non-transitory computer readable storage medium storing instructions,
wherein the instructions, based on executed by one or more processors, cause the one or more processors to: perform the method according to any one of claims 1 to 9.

13. A method for performing communication, the method performed by an Access and Mobility management Function (AMF) and comprising:
receiving a registration request message from a User Equipment (UE),
wherein the registration request message includes capability information related to that the UE supports location validity information related to a network slice; and
transmitting a registration accept message to the UE,
wherein the registration accept message includes location validity information related to the network slice, based on the capability information,
wherein the location validity information is used to determine whether the UE is located within an area of service of the network slice.

14. An Access and Mobility management Function (AMF) configured to operate in mobile communication system, the AMF comprising:
at least one transceiver;
at least one processor; and
at least one computer memory operably connectable to the at least one processor and storing instructions that, based on being executed by the at least one processor, perform operations comprising: the method of claim 13.
